# EUROPÄISCHE PATENTSCHRIFT

(11) **EP 3 129 118 B1**
(45) Veröffentlichungstag und Bekanntmachung des Hinweises auf die Patenterteilung: **12.01.2022**
(21) Anmeldenummer: 15718351.8
(22) Anmeldetag: 01.04.2015
(51) Int. Cl.: B01D 15/20, B01D 15/22, G01N 30/60, B01J 20/28, B01D 63/08

(54) **FILTRATIONSVORRICHTUNG**
FILTRATION DEVICE
DISPOSITIF DE FILTRATION

(30) Priorität: 08.04.2014 DE 102014104984
(43) Veröffentlichungstag der Anmeldung: 15.02.2017
(73) Patentinhaber: Sartorius Stedim Biotech GmbH, 37079 Göttingen (DE)
(72) Erfinder: LEUTHOLD, Martin, 37079 Göttingen (DE)
(74) Vertreter: Schneider, Peter Christian
(86) Internationale Anmeldenummer: PCT/EP2015/057237
(87) Internationale Veröffentlichungsnummer: WO 2015/155099

(56) Entgegenhaltungen:
- EP-A1- 0 787 523
- DE-A1- 10 236 664
- DE-A1-102012 002 540
- DE-C1- 19 943 921
- "Filtervlies Eurobond / Filtervlies Eurocross / Filtervlies Eurofelt / Filtervlies Eurospun", IMZ - Ingenieurbüro für Maschinenbau & Zubehör - Filtervlies , XP002741823, Gefunden im Internet: URL:http://www.imz-online.de/filtervlies.h tm [gefunden am 2015-07-06]
- None

## Beschreibung

### Gebiet der Erfindung

Die Erfindung betrifft eine Filtrationsvorrichtung bestehend aus einem Gehäuse mit einem Einlass zur Zufuhr von zu filtrierender Flüssigkeit und einem Auslass zur Abfuhr von filtriertem Permeat sowie einem zwischen Ein- und Auslass angeordneten Filtermodul mit einer Mehrzahl von aus mindestens einer Membran bestehenden, durchströmbaren Membranlagen, die flüssigkeitsdicht mit dem Gehäuse verbunden sind, wobei dem Filtermodul zum Einlass hin ein Anströmkanal vorgelagert und zum Auslass hin ein Abströmkanal nachgelagert ist und wobei zwischen mindestens zwei Membranlagen mindestens eine aus einem Vliesmaterial ausgebildete und durchströmbare Zwischenlage angeordnet ist.

### Stand der Technik

Derartige Filtrationsvorrichtungen sind bekannt aus der DE 199 43 921 C1 sowie der DE 102 36 664 A1.

Membranadsorber (poröse Adsorptionsmembranen) sind eine etablierte Alternative zu konventionellen chromatographischen Gelen (Definition: Polymerisations- und Polykondensationsharze, vernetzte Polyacrylamid- oder Polydextrangele, Cellulose). Im Unterschied zu Gelen wird das adsorptive Material nicht in Säulen gepackt, sondern bevorzugt in Form von Flachfiltern oder Wickelmodulen ausgeführt; bautechnisch vergleichbar mit Filterkapsulen. Durch die Verwendung von mehreren Lagen entsteht vergleichbar zur Gelchromatographie eine chromatographische aktive Schicht (Bett) mit einer definierten Höhe.

Die chromatographische Leistung eines solchen Filtermoduls hängt dabei im Wesentlichen nicht nur von den Eigenschaften des verwendeten adsorptiven Mediums ab (z.B. Flussleistung, Bindekapazität), sondern auch von der Auslegung des Filtermoduls als solches. Eine unvorteilhafte Auslegung der Kanäle z.B. durch über- oder unterdimensionierte Querschnitte, hohes Totvolumen oder Totzonen wirken sich negativ auf die Leistung aus. Leistung bezieht sich hierbei insbesondere auf Durchbruchsverhalten, Druckabfall über das chromatographische Bett, Möglichkeiten zur Entlüftung oder Trennschärfe, aber auch auf den Verbrauch an Puffern für die unterschiedlichen chromatographischen Schritte. Eine der wichtigsten Einflussgrößen für die Auslegung von Filtrationseinheiten ist dabei die Fluiddynamik. Diese beeinflusst maßgeblich Rückvermischungseffekte sowie eine gleichmäßige An- aber auch Abströmung des chromatographischen Bettes.

Optimierte Wickelmodule oder Flachfiltermodule sind im Allgemeinen bezüglich ihrer Flussleistung an die Geometrien der Strömungskanäle angepasst, wobei mögliche Totzonen vermieden werden sollen, das heißt, das Totvolumen soll reduziert werden. Das Totvolumen kann dabei als Verhältnis Totvolumen zu Bettvolumen beschrieben werden, wobei das Bettvolumen sich aus Dicke der Membran und verbauter Membranfläche ergibt.

Aus der DE 197 11 083 C2 und der DE 197 11 186 A1 ist jeweils eine Filtrationsvorrichtung bestehend aus einem Gehäuse mit einem Einlass zur Zufuhr von zu filtrierender Flüssigkeit und einem Auslass zur Abfuhr von filtriertem Permeat sowie einem zwischen Ein- und Auslass angeordneten Filtermodul, das als Membranadsorbermodul ausgebildet sein kann, bekannt. Das Adsorbermodul ist dabei als eine Adsorptionsmembran ausgebildet, die zu einem Hohlzylinder aufgewickelt ist. Das Membranadsorbermodul weist dabei nach innen zu einem Kern und nach außen zur Wandung der Membranadsorbercapsule jeweils einen Ringspalt auf, wobei der äußere Ringspalt einen Abströmkanal und der innere Ringspalt einen Anströmkanal bildet. An den Stirnflächen ist das Membranadsorbermodul jeweils durch eine Vergussmasse abgedichtet. Über dem inneren Ringspalt kann Medium zugeführt und in radialer Richtung durch die Wandung des Membranadsorbermoduls hindurchgeführt und das Permeat über den äußeren Ringspalt abgeführt werden. Das Adsorber- oder Filtermodul kann dabei auch als ein Flachfiltermodul mit gestapelten flachen Membranlagen ausgebildet sein. Aus den eingangs genannten, gattungsbildenden Druckschriften ist es bekannt, zwischen einzelnen Membranlagen mehrlagiger Filterkassetten, die bei Betrieb in Richtung der Flächennormalen der Membranen durchströmt werden, Zwischenschichten als Abstandhalter anzuordnen, um den Abstand zwischen den Membranlagen zu stabilisieren. Zusätzlich kommt diesen Abstandhalter-Schichten eine Drainagewirkung zu.

Aus der DE 296 18 092 U1 ist das Prinzip der Abstandhalter-Schichten ebenfalls bekannt, allerdings angewendet auf Crossflow- und Dead-End-Filterkassetten.

Aus der DE 100 22 259 A1 ist es bekannt, zwischen zwei Membranlagen von Crossflow-Filterkassetten zur Bildung von Überströmspalten ein Retentatsabstandhalterelement, dessen Randbereiche beidseitig von Retentatsabstandhalterrahmen abgedeckt werden, anzuordnen.

Aus der US 3 508 662 A ist ein Spiralmodul für eine künstliche Niere bekannt, das eine Membranlage mit einer als Abstandhalter dienenden Zwischenlage in Form eines Unterstützungsnetzes aufweist. Die Membranlage ist gemeinsam mit der Zwischenlage spiralförmig um einen inneren Kern gewickelt.

Es ist bekannt, dass funktionalisierte Membranen quellen, also in ihrer Dicke zunehmen können. Durch den Aufbau aus mehreren Lagen kann somit auch eine anscheinend nur geringfügige Quellung in Summe die Leistung der Filtrationseinheit beeinflussen. Dies trifft insbesondere auf Filtrationseinheiten mit optimierten und damit entsprechend kleinen Kanalquerschnitten zu. Durch die Quellung können sich Kanalquerschnitte verengen und die Packungsdichte des chromatographischen Betts kann erhöht werden. Dies führt zu einer Abnahme der Flussleistung sowie einer Verschlechterung der Strömungsverteilung und reduziert damit die chromatographische Leistung (Anstieg der Durchbruchskurve, Breite des Elutionspeaks, Pufferverbrauch).

Neben der allgemeinen Kompression des Membranstapels bedingt durch das Anlegen eines Druckgradienten zwischen Ein- und Ausgang, steigt die Kompression, wie oben beschrieben, durch das Quellverhalten der Membran. Dies hat zur Folge, dass sich der Membranstapel verdichtet. Des Weiteren kann es dazu führen, dass An- und/oder Abströmkanal verengt werden. Diese Effekte verursachen damit eine ungleichmäßige Verteilung bei der Durchströmung des Membranstapels sowie eine Zunahme des Druckabfalls und führen damit zu den beschrieben Nachteilen. Der Effekt steigt entsprechend mit zunehmender Membranlagenanzahl.

Die bekannten Abstandhalterschichten sind zur Behebung dieses Nachteils nur bedingt geeignet. Zwar verhindern sie aufgrund ihrer Steifigkeit eine Reduzierung des Abstandes zwischen den Membranlagen, halten diese also auf einem vorgegebenen Abstand zueinander. Dies wirkt aber der bei quellbaren Membranen mit dem Adsorptionsprozess verbundenen Quellung der Membranen entgegen und reduziert so die Effizienz der Adsorption. Setzt man hingegen derartige Abstandhalterschichten nur zu Gewährleistung eines Mindestabstandes zwischen den Membranlagen ein und wählt im Übrigen den Abstand zwischen den Membranlagen um den Quellbetrag größer als die Dicke der Abstandhalterschichten, führt dies zu einer unerwünschten Vergrößerung des axialen Bauraums der Filterkassetten.

### Aufgabenstellung

Aufgabe der vorliegenden Erfindung ist es, die bekannten Filtervorrichtungen, insbesondere mit optimierten funktionalisierten Filtermodulen, so zu verbessern, dass die Nachteile, die durch Quellung der Membranen entstehen können, vermieden werden und die Filtervorrichtungen einfach und kostengünstig aufgebaut bzw. herstellbar sind.

### Darstellung der Erfindung

Diese Aufgabe wird in Verbindung mit dem Oberbegriff des Anspruches 1 dadurch gelöst, dass die mindestens eine Membran quellbar ist und die mindestens eine Zwischenlage zum Ausgleich von Quellungen der Membranlagen komprimierbar ist, wobei die Dicke der Zwischenlage 75 bis 125% der Dicke der Membranlagen beträgt, das Flächengewicht der Zwischenlage 30 bis 80 g/m² beträgt, und der Luftdurchlass der Zwischenlage 2000 bis 5000 L/(m² * s) beträgt.

Durch, die Anordnung einer komprimierbaren und durchströmbaren Zwischenlage zwischen mindestens zwei Membranlagen wird die Quellung der Membranlagen ausgeglichen und ein Leistungsverlust der Filtriervorrichtung vermieden. Da unterschiedliche Puffer bzw. deren Komponenten sich unterschiedlich stark auf die Quellung auswirken, führt die Verwendung von komprimierbaren Zwischenlagen weiterhin zu einer geringeren Abhängigkeit des Druckverlustes vom Puffer, so wird z.B. auch das Beladen mit destilliertem Wasser bei geringerem Druckverlust möglich.

Durch das Einbringen von Zwischenlagen kann weiterhin eine homogenere Durchströmung von unterschiedlich stark durchströmten Bereichen einzelner Membranlagen (z.B. durch Porengrößenverteilung, Pfropfungsgrad) erreicht werden. So kann sich das Medium in den einzelnen Zwischenlagen relativ homogen verteilen.

Viele Vliese sind durch ihre mechanischen Eigenschaften, wie Kompressibilität und einen viel geringeren Strömungswiderstand im Vergleich zu Membranen, gut geeignet. Vlies bezeichnet allgemein alle aus Fasern bestehende Stoffe welche nach DIN 61210 hergestellt werden (Trockenvliese, Nassvliese, Vliese hergestellt im Extrusionsverfahren etc.). Dabei können auch Zwischenlagen mit unterschiedlichen Eigenschaften (z.B. Dicke, Flächengewicht) eingesetzt werden. Als Fasern sind insbesondere Fasern bestehend aus Kunststoffen, wie Polyalkylene, PP (Polypropylen), PE (Polyethylen), PS (Polystyrol), PU (Polyurethan), Polysulfone, Polyethersulfone, Polyester geeignet.

Erfindungsgemäß beträgt die Dicke der Zwischenlage 75 bis 125% der Dicke der Membranlagen, das Flächengewicht der Zwischenlage beträgt 30 bis 80 g/m² und der Luftdurchlass der Zwischenlage beträgt 2000 bis 5000 L/(m² * s) - gemessen bei einer Druckdifferenz von 2 mbar (DIN EN ISO 9237).

Nach einer bevorzugten Ausführungsform der Erfindung ist das Vliesmaterial der Zwischenlage aus einem synthetischen Polymer ausgebildet.

Das Verhältnis von Totvolumen zu Filtermaterialvolumen liegt bei der erfindungsgemäßen Filtriervorrichtung bevorzugt im Bereich von 1,2 bis 1,6 bei einer Porosität des Filtermaterials von 80% selbstregulierend durch die Zwischenlagen.

Nach einer bevorzugten Ausführungsform der Erfindung weist die kompressible Zwischenlage einen geringeren Strömungswiderstand als die Membranlagen auf. Gemäß einer weiteren bevorzugten Ausführungsform der Erfindung weist die Zwischenlage eine vorgegebene Struktur auf.

Der Ausgleich der Quellung der Membranlage wird neben der Kompressibilität der Zwischenlage auch durch die Struktur der Zwischenlage, zum Beispiel Hohlräume auf der Oberfläche, unterstützt.

Gemäß einer weiteren bevorzugten Ausführungsform der Erfindung ist die Dicke der Zwischenlage in Abhängigkeit von dem Quellgrad der Membranlagen und den physikalischen Eigenschaften der Zwischenlage vorgegeben.

Ganz allgemein haben sich für die Zwischenlagen Dicken zwischen 0,1 und 0,3 mm als günstig erwiesen.

Nach einer bevorzugen Ausführungsform der Erfindung weist der Anströmkanal und/oder der Abströmkanal ebenfalls eine komprimierbare und durchströmbare Zwischenlage auf.

Auch kann der Abströmkanal eine relativ starre Zwischenlage aus Gewebe aufweisen, um eine Verengung des Kanalquerschnittes durch den anliegenden Druckgradienten über das Filtermodul zu verhindern.

Gemäß einer weiteren bevorzugten Ausführungsform der Erfindung ist das Filtermodul als ein Flachfiltermodul mit gestapelten flachen Membranlagen ausgebildet. Das Filtermodul kann aber auch als ein Wickelmodul mit einer auf einem Kern aufgewickelten Bahn ausgebildet sein. Dabei ist die Bahn aus wenigstens einer Membranlage und in einer besonderen Ausführungsform der Erfindung ist die Zwischenlage in Teilbereichen zwischen der wenigstens einen Membranlage als Bahn angeordnet.

Nach einer weiteren bevorzugten Ausführungsform der Erfindung sind die Membranlagen als Adsorptionsfilter ausgebildet. Insbesondere kann die Filtrationsvorrichtung zur chromatographischen Trennung von Molekülen mittels Membranadsorbern verwendet werden. Die Membranlagen des Adsorptionsfilters können mit gleichen oder verschiedenen Adsorptionseigenschaften ausgestattet sein.

Gemäß einer weiteren bevorzugten Ausführungsform der Erfindung ist die Filtrationsvorrichtung als steril anschließbare Komponente für vorsterilisierte Einheiten mit mindestens einem flexiblen Behälter ausgebildet.

Weitere Merkmale der Erfindung ergeben sich aus der nachfolgenden ausführlichen Beschreibung und den beigefügten Zeichnungen, in denen bevorzugte Ausführungsformen der Erfindung beispielhaft veranschaulicht sind.

### Kurzbeschreibungen der Zeichnungen

In den Zeichnungen zeigen:
- Figur 1:: eine Seitenansicht im Schnitt einer Filtrationsvorrichtung mit einem als Flachfiltermodul ausgebildeten Filtermodul,
- Figur 2:: eine Seitenansicht im Schnitt einer Filtrationsvorrichtung mit einem als Wickelmodul ausgebildeten Filtermodul,
- Figur 3:: eine Seitenansicht im Schnitt der Filtrationsvorrichtung von Fig. 1 mit schematisch durch Pfeile dargestellter Durchströmung und
- Figur 4:: eine Seitenansicht im Schnitt der Filtrationsvorrichtung von Fig. 2 mit schematisch durch Pfeile dargestellter Durchströmung.

### Beschreibung der Ausführungsbeispiele

Eine Filtrationsvorrichtung 1 besteht im Wesentlichen aus einem Gehäuse 2, einem Einlass 3, einem Auslass 4 und einem Filtermodul 5.

Das Gehäuse 2 weist in vertikaler Richtung oben den Einlass 3 im Bereich eines Deckels 6 und in vertikaler Richtung unten den Auslass 4 im Bereich eines Bodens 7 auf. Die seitliche Gehäusewandung 8 ist in vertikaler Richtung oben durch den Deckel 6 und in vertikaler Richtung unten durch den Boden 7 verschlossen.

Zwischen dem Einlass 3 und dem Auslass 4 des Gehäuses 2 ist das Filtermodul 5 angeordnet. Das Filtermodul 5 weist eine Mehrzahl von Membranlagen 9 auf, die mit dem Gehäuse 2 flüssigkeitsdicht verbunden sind, um sicherzustellen, dass alle über den Einlass 3 zugeführte Flüssigkeit die Membranlagen 9 passieren muss und diese nicht unfiltriert umgehen kann. Zwischen den Membranlagen 9 ist in den Ausführungsbeispielen jeweils eine Zwischenlage 10 angeordnet, die durchströmbar und komprimierbar bzw. kompressibel ausgebildet ist. Dem Filtermodul 5 ist zum Einlass 3 hin ein Anströmkanal 11 vorgelagert und zum Auslass 4 hin ein Abströmkanal 12 nachgelagert.

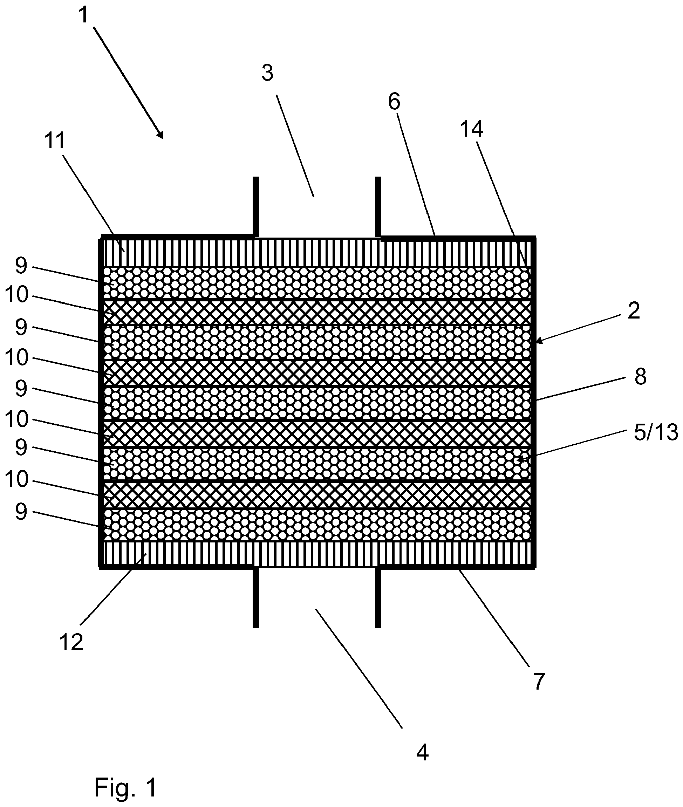

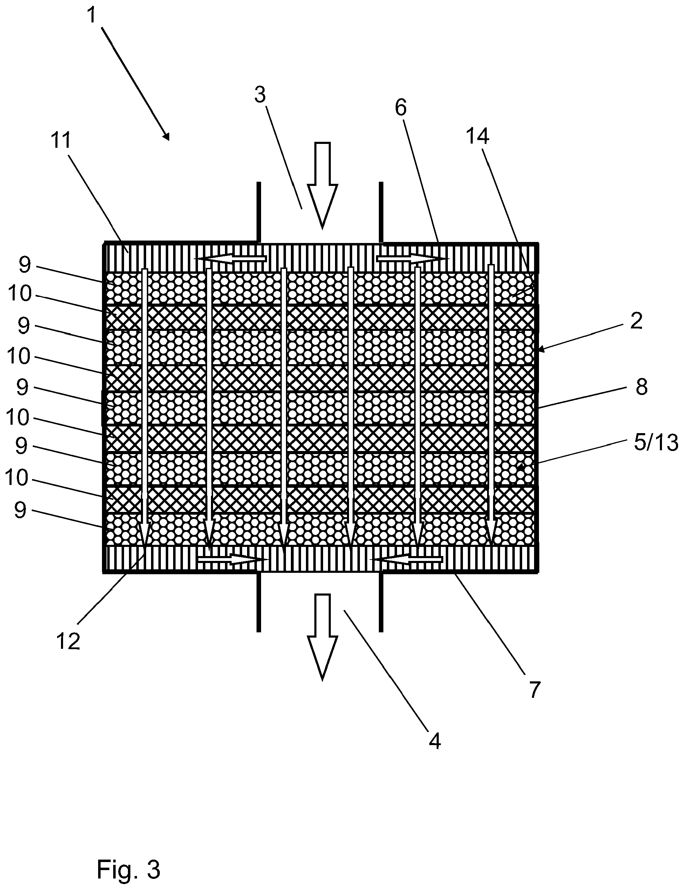

Entsprechend dem Ausführungsbeispiel der Figuren 1 und 3 ist das Filtermodul 5 als ein Flachfiltermodul 13 mit gestapelten flachen Membranlagen 9 ausgebildet. Zwischen den Membranlagen 9 sind die Zwischenlagen 10 angeordnet. Die flachen Membranlagen 9 sind an ihren umlaufenden Seitenflächen 14 mit der seitlichen Gehäusewandung 8 flüssigkeitsdicht verbunden. Der Anströmkanal 11 und der Abströmkanal 12 verlaufen parallel zu den horizontal angeordneten Membranlagen 9 und sind damit quer zur seitlichen Gehäusewandung 8 angeordnet. Figur 3 zeigt exemplarisch die Flussverteilung im Flachfiltermodul 13.

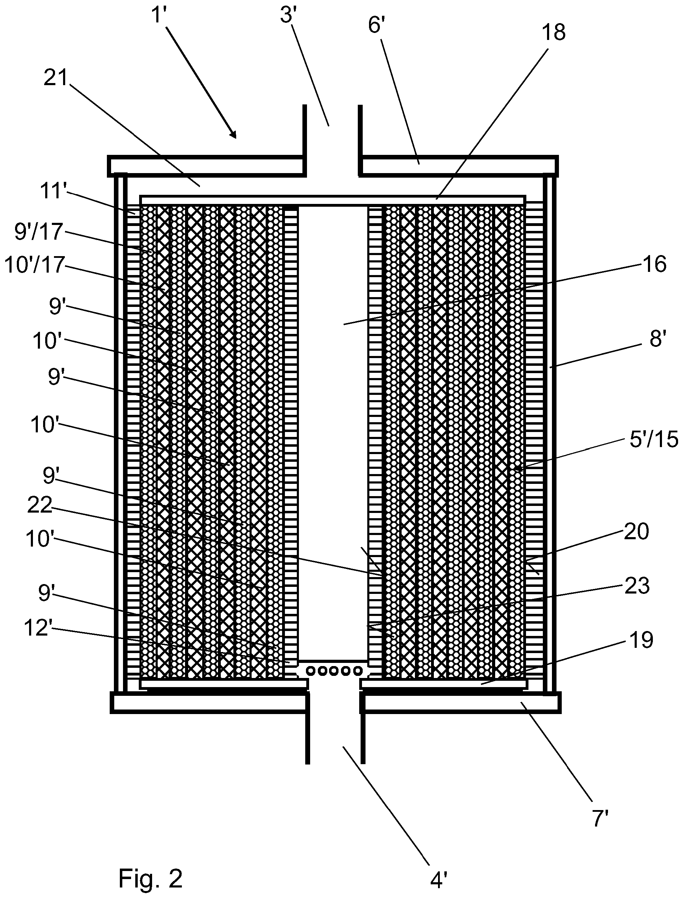

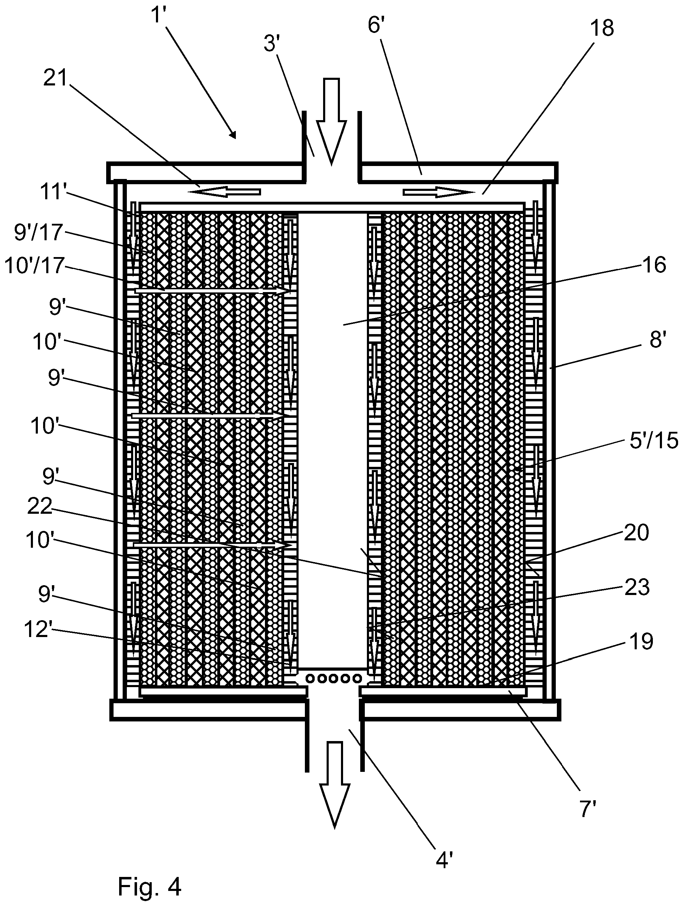

Entsprechend dem Ausführungsbeispiel der Figuren 2 und 4 ist das Filtermodul 5' als ein Wickelmodul 15 mit einer auf einen vertikal angeordneten Kern 16 aufgewickelten Bahn 17 ausgebildet. Die Bahn 17 besteht aus einer bahnförmigen Membranlage 9' und einer bahnförmigen Zwischenlage 10' ausgebildet. Durch die Aufwicklung entstehen bezogen auf den Querschnitt ebenfalls eine Mehrzahl von Membranlagen 9' zwischen denen die Zwischenlagen 10' angeordnet sind. Das Wickelmodul 15 ist in vertikaler Richtung oben von einer oberen Endkappe 18 und in vertikaler Richtung unten von einer unteren Endkappe 19 flüssigkeitsdicht abgedeckt. Die untere Endkappe 19 ist zudem flüssigkeitsdicht mit dem Boden 7' des Gehäuses 2' verbunden.

Der Anströmkanal 11' wird von einem äußeren Ringspalt zwischen seitlicher Gehäusewandung 8' und der vertikalen Außenfläche 20 des Wickelmoduls 15 gebildet. Der Anströmkanal 11' ist über einen zwischen oberer Endkappe 18 und Deckel 6' gebildeten horizontalen Kanalraum 21 mit dem Einlass 3' verbunden.

Der Abströmkanal 12' wird von einem inneren Ringspalt zwischen der vertikalen Innenfläche 22 des Wickelmoduls 15 und der seitlicher Außenwandung 23 des Kerns 16 gebildet. Am unteren Ende des Kerns 16 ist der Abströmkanal 12' mit dem Auslass 4' verbunden.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

### Bezugszeichenliste

- 1, 1': Filtrationsvorrichtung
- 2, 2': Gehäuse
- 3, 3': Einlass
- 4, 4': Auslass
- 5, 5': Filtermodul
- 6: Deckel
- 7, 7': Boden
- 8, 8': seitliche Gehäusewandung
- 9, 9': Membranlagen
- 10, 10': Zwischenlage
- 11, 11': Anströmkanal
- 12, 12': Abströmkanal
- 13: Flachfiltermodul
- 14: Seitenfläche von 9
- 15: Wickelmodul
- 16: Kern
- 17: Bahn
- 18: oberen Endkappe
- 19: unteren Endkappe
- 20: vertikalen Außenfläche von 15
- 21: horizontaler Kanalraum
- 22: vertikalen Innenfläche von 15
- 23: seitlicher Außenwandung von 16

## Patentansprüche

1. Filtrationsvorrichtung (1, 1') bestehend aus einem Gehäuse (2, 2') mit einem Einlass (3, 3') zur Zufuhr von zu filtrierender Flüssigkeit und einem Auslass (4, 4') zur Abfuhr von filtriertem Permeat sowie einem zwischen Einlass (3, 3') und Auslass (4, 4') angeordneten Filtermodul (5, 5') mit einer Mehrzahl von aus mindestens einer Membran bestehenden, durchströmbaren Membranlagen (9, 9'), die flüssigkeitsdicht mit dem Gehäuse (2, 2') verbunden sind, wobei dem Filtermodul (5, 5') zum Einlass (3, 3') hin ein Anströmkanal (11, 11') vorgelagert und zum Auslass (4, 4') hin ein Abströmkanal (12, 12') nachgelagert ist und wobei zwischen mindestens zwei Membranlagen (9, 9') mindestens eine aus einem Vliesmaterial ausgebildete und durchströmbare Zwischenlage (10, 10') angeordnet ist,
**dadurch gekennzeichnet,**
**dass** die mindestens eine Membran quellbar ist und die mindestens eine Zwischenlage (10, 10') zum Ausgleich von Quellungen der Membranlagen (9, 9') komprimierbar ist,
wobei die Dicke der Zwischenlage (10, 10') 75 bis 125% der Dicke der Membranlagen (9, 9') beträgt, das Flächengewicht der Zwischenlage (10, 10') 30 bis 80 g/m² beträgt und der Luftdurchlass der Zwischenlage (10, 10') 2000 bis 5000 L/(m² * s) beträgt.

2. Filtrationsvorrichtung nach Anspruch 1,
**dadurch gekennzeichnet,**
**dass** das Vliesmaterial der Zwischenlage (10, 10') aus einem synthetischen Polymer ausgebildet ist.

3. Filtrationsvorrichtung nach einem der Ansprüche 1 bis 2,
**dadurch gekennzeichnet,**
**dass** die Zwischenlage (10, 10') einen geringeren Strömungswiderstand als die Membranlagen (9, 9') aufweist.

4. Filtrationsvorrichtung nach einem der Ansprüche 1 bis 3,
**dadurch gekennzeichnet,**
**dass** die Dicke der Zwischenlage (10, 10') in Abhängigkeit von dem Quellgrad der Membranlagen (9, 9') und den physikalischen Eigenschaften der Zwischenlage (10, 10') vorgegeben ist.

5. Filtrationsvorrichtung nach einem der Ansprüche 1 bis 4,
**dadurch gekennzeichnet,**
**dass** der Anströmkanal (11, 11') und/oder der Abströmkanal (12, 12') eine komprimierbare und durchströmbare Zwischenlage (10, 10') aufweist.

6. Filtrationsvorrichtung nach einem der Ansprüche 1 bis 5,
**dadurch gekennzeichnet,**
**dass** das Filtermodul (5) als ein Flachfiltermodul (13) mit gestapelten flachen Membranlagen (9) ausgebildet ist.

7. Filtrationsvorrichtung nach einem der Ansprüche 1 bis 5,
**dadurch gekennzeichnet,**
**dass** das Filtermodul (5') als ein Wickelmodul (15) mit einer auf einem Kern (16) aufgewickelten Bahn (17) aus wenigstens zwei Membranlagen ausgebildet ist.

8. Filtrationsvorrichtung nach einem der Ansprüche 1 bis 7,
**dadurch gekennzeichnet,**
**dass** die Membranlagen (9, 9') als Adsorptionsfilter mit gleichen oder verschiedenen Adsorptionseigenschaften ausgebildet sind.

9. Filtrationsvorrichtung nach einem der Ansprüche 1 bis 8,
**dadurch gekennzeichnet,**
**dass** die Filtrationsvorrichtung (1, 1') als steril anschließbare Komponente für vorsterilisierte Einheiten mit mindestens einem flexiblen Behälter ausgebildet ist.

10. Verwendung der Filtrationsvorrichtung nach einem der Ansprüche 1 bis 9, **dadurch gekennzeichnet,**
**dass** die Filtrationsvorrichtung (1, 1') zur Trennung von Molekülen mittels Membranadsorbern eingesetzt wird.

## Claims

1. A filtration device (1, 1') consisting of a housing (2, 2') with an inlet (3, 3') for the supply of fluid to be filtered and an outlet (4, 4') for the discharge of filtered permeate as well as a filter module (5, 5') arranged between the inlet (3, 3') and the outlet (4, 4') having a plurality of permeable membrane layers (9, 9') consisting of at least one membrane, said membrane layers being connected in fluid-tight manner to the housing (2, 2'), wherein an inflow channel (11, 11') is arranged upstream from the filter module (5, 5') towards the inlet (3, 3') and an outflow channel (12, 12') is arranged downstream towards the outlet (4, 4')
and wherein at least one permeable intermediate layer (10, 10') formed from at least one non-woven material is arranged between at least two membrane layers (9, 9'),
**characterized in that**
the at least one membrane is swellable and the at least one intermediate layer (10, 10') is compressible for the compensation of swellings of the membrane layers (9, 9'),
wherein the thickness of the intermediate layer (10, 10') is 75 to 125% of the thickness of the membrane layers (9, 9'), the mass per unit area of the intermediate layer (10, 10') is 30 to 80 g/m² and the air permeability of the intermediate layer (10, 10') is 2000 to 5000 L/(m² * s).

2. The filtration device according to claim 1, **characterized in that**
the non-woven material of the intermediate layer (10, 10') is formed from a synthetic polymer.

3. The filtration device according to any of claims 1 to 2,
**characterized in that**
the intermediate layer (10, 10') has a lower flow resistance than the membrane layers (9, 9').

4. The filtration device according to any of claims 1 to 3,
**characterized in that**
the thickness of the intermediate layer (10, 10') is specified as a function of the degree of swelling of the membrane layers (9, 9') and the physical properties of the intermediate layer (10, 10').

5. The filtration device according to any of claims 1 to 4,
**characterized in that**
the inflow channel (11, 11') and/or the outflow channel (12, 12') have a compressible and permeable intermediate layer (10, 10').

6. The filtration device according to any of claims 1 to 5,
**characterized in that**
the filter module (5) is embodied as a flat filter module (13) with stapled flat membrane layers (9).

7. The filtration device according to any of claims 1 to 5,
**characterized in that**
the filter module (5') is embodied as a spiral-wound module (15) with a web (17) wound on a core (16) consisting of at least two membrane layers.

8. The filtration device according to any of claims 1 to 7,
**characterized in that**
the membrane layers (9, 9') are embodied as adsorption filters with the same or different adsorption properties.

9. The filtration device according to any of claims 1 to 8,
**characterized in that**
the filtration device (1, 1') is embodied as a sterile connectable component for pre-sterilized units having at least one flexible container.

10. Use of the filtration device according to any of claims 1 to 9,
**characterized in that**
the filtration device (1, 1') is used for the separation of molecules by means of membrane adsorbers.

## Revendications

1. Dispositif de filtration (1, 1') composé d'un logement (2, 2') avec une entrée (3, 3') pour l'amenée d'un liquide à filtrer et une sortie (4, 4') pour l'évacuation d'un perméat filtré, ainsi qu'un module de filtrage (5, 5') agencé entre l'entrée (3, 3') et la sortie (4, 4') avec une pluralité de couches de membrane (9, 9') composées d'au moins une membrane et qui peuvent être traversées, qui sont reliées au logement (2, 2') de façon étanche aux liquides, dans lequel, par rapport au module de filtrage (5, 5'), un canal d'alimentation (11, 11') est monté en amont en allant vers l'entrée (3, 3'), et un canal d'évacuation (12, 12') est monté en aval en allant vers la sortie (4, 4')
et dans lequel au moins une couche intermédiaire (10, 10') conçue dans un matériau non tissé et qui peut être traversée est agencée entre au moins deux couches de membrane (9, 9'),
**caractérisé en ce que**
la au moins une membrane est gonflable et la au moins une couche intermédiaire (10, 10') peut être comprimée pour compenser des gonflements des couches de membrane (9, 9'),
dans lequel l'épaisseur de la couche intermédiaire (10, 10') représente de 75 à 125 % de l'épaisseur des couches de membrane (9, 9'), le poids surfacique de la couche intermédiaire (10, 10') représente de 30 à 80 g/m² et le passage d'air de la couche intermédiaire (10, 10') représente de 2 000 à 5 000 L/(m² * s).

2. Dispositif de filtration selon la revendication 1, **caractérisé en ce que**
le matériau non tissé de la couche intermédiaire (10, 10') est conçu en un polymère synthétique.

3. Dispositif de filtration selon l'une des revendications 1 à 2,
**caractérisé en ce que**
la couche intermédiaire (10, 10') présente une résistance à l'écoulement plus réduite que les couches de membrane (9, 9').

4. Dispositif de filtration selon l'une des revendications 1 à 3,
**caractérisé en ce que**
l'épaisseur de la couche intermédiaire (10, 10') est prédéfinie en fonction du degré de gonflement des couches de membrane (9, 9') et des propriétés physiques de la couche intermédiaire (10, 10').

5. Dispositif de filtration selon l'une des revendications 1 à 4,
**caractérisé en ce que**
le canal d'alimentation (11, 11') et/ou le canal d'évacuation (12, 12') présente une couche intermédiaire (10, 10') qui peut être comprimée et traversée.

6. Dispositif de filtration selon l'une des revendications 1 à 5,
**caractérisé en ce que**
le module de filtrage (5) est conçu en tant que module de filtrage plat (13) avec des couches de membrane (9) plates empilées.

7. Dispositif de filtration selon l'une des revendications 1 à 5,
**caractérisé en ce que**
le module de filtrage (5') est conçu en tant que module enroulé (15) avec une bande (17) enroulée sur un noyau (16) d'au moins deux couches de membrane.

8. Dispositif de filtration selon l'une des revendications 1 à 7,
**caractérisé en ce que**
les couches de membrane (9, 9') sont conçues en tant que filtre d'adsorption avec des propriétés d'adsorption identiques ou différentes.

9. Dispositif de filtration selon l'une des revendications 1 à 8,
**caractérisé en ce que**
le dispositif de filtration (1, 1') est conçu en tant que composante raccordable stérile pour des unités pré-stérilisées avec au moins un récipient flexible.

10. Utilisation du dispositif de filtration selon l'une des revendications 1 à 9,
**caractérisé en ce que**
le dispositif de filtration (1, 1') est introduit pour la séparation de molécules au moyen d'adsorbeurs membranaires.
